Europäisches Patentamt

(19) European Patent Office

Office européen des brevets

(11) EP 0 932 248 A1

(12) **EUROPEAN PATENT APPLICATION**

(43) Date of publication:
28.07.1999 Bulletin 1999/30

(51) Int. Cl.$^6$: **H02M 3/155**

(21) Application number: 98202179.2

(22) Date of filing: 29.06.1998

(84) Designated Contracting States:
AT BE CH CY DE DK ES FI FR GB GR IE IT LI LU
MC NL PT SE
Designated Extension States:
AL LT LV MK RO SI

(30) Priority: 22.01.1998 ZA 9800541

(71) Applicant: **Ainslie, Rosemary Ann**
Cape Town 8001, Western Cape (SA)

(72) Inventor: **Ainslie, Rosemary Ann**
Cape Town 8001, Western Cape (SA)

(74) Representative:
**Mertens, Hans Victor**
van Exter Polak & Charlouis B.V.,
P.O. Box 3241
2280 GE Rijswijk (NL)

(54) **Method of harnessing a back-emf, and apparatus used in performing the method.**

(57) A method of achieving high efficiency of energy usage includes passing current through an inductor, causing the current to be repeatedly interrupted, thereby generating a back emf in the inductor and thereafter harnessing the back emf so generated to supply energy to an energy receiving or processing device. The frequency of interruptions should be 40 Hz or more and is achievable by applying rectifying means to the current. The invention extends to apparatus for harnessing such back-emf and energy generating means comprising an inductor and current interruption means connectable to an energy receiving device.

**Figure 4**

## Description

The invention relates to a method of harnessing back-emf for use in powering a load or replenishing a depletable energy source and extends to apparatus used in performing the method.

Conventional switching circuits are well known in electrical energy conversion technology and switch mode systems have been employed to enhance energy utilization efficiencies. The concept of absorbing electrical energy released by the collapse of autoelectronic emissions from a discharge tube is disclosed in US-A-5 449 989. This document discloses a circuit that includes an output port connected to a current sink, which is effective to absorb at least a substantial portion of such emissions. The current sink may be an electric motor or a secondary battery.

The concept of applying a back-emf in electrical circuitry is also known. For example, in US-A-5 521 476 is disclosed a control circuit for a disk drive motor in which back-emf blocking circuitry is employed to prevent dissipation of a back-emf through the power supply. By contrast WO-A-9613892 discloses the use of a back-emf to trigger a response in a control system for a mechanical system so that driving pulses are generated to accomplish a desired displacement motion.

In the present invention, to achieve high energy efficiencies, greater than unity in relation to a conventional test circuit, a back-emf generated in an inductor is harnessed, so as to return energy associated with such emf to a depletable energy source supplying such circuit, or to a load included in the same primary circuit as the energy source. It is envisaged that a wide range of electrical power supply sources will derive benefit from the invention disclosed hereunder.

According to a first aspect of the invention, a method of harnessing back-emf on to an electrical circuit to increase the efficiency of energy usage to a factor of 90 % or more in comparison with a Resistor Temperature Versus Wattage Calibration Circuit, comprises the steps of providing a circuit, said circuit including an inductor and an energy receiving device and being configured to operate the device, providing a source of electrical energy capable of supplying an electrical current to the circuit, connecting the source in operative configuration in series with the inductor, causing current to pass from the source through the inductor, causing a back-emf to be generated in the inductor, such back-emf having electrical energy associated with it, thereby providing an additional source of potential difference to the circuit, said source of additional potential difference being sufficient to supply energy to such circuit and supplying the energy associated with the back-emf to the receiving device.

In a preferred form of the method, the step of causing the back-emf to be generated includes the step of interrupting the current. Preferably, the method includes interrupting and restoring the current repeatedly. Further, the interrupting and restoring of the current includes the step of applying rectifying means to the current. The frequency of interruptions is preferably 40 Hz or more and more preferably should be at least 50 Hz.

In a further preferred form of the invention, the method includes generating a back-emf of sufficient magnitude to cause the comparative energy usage efficiency to be at least unity. This may be achieved by setting and controlling a suitable value for a variable selected from one or more of the frequency of interruptions from the wave rectifier, the duty cycle, the thickness of the wiring in the circuit and efficiency of the core of the inductor, the value being set in accordance with operational requirements of a desired end application.

In a yet further preferred form of the invention, the receiving device in the circuit is at least one of an energy consuming load and an energy storage means. Preferably, the energy storage means is a replenishable source of electrical energy. Such energy source may be of alternating or direct current.

The method further preferably includes providing at least one inductive load, the or each inductive load being operatively associated with the or each receiving device.

The inductor may be a transformer or other suitable inductive device.

According to a second aspect of the invention, a method of restoring electrical energy to a source comprises the steps of providing a closed circuit including a source of electrical energy and an inductor configured to operate therein and receive electrical energy from the source; causing electric current to pass from the source to the inductor; causing the establishment of an extruded magnetic field associated with the inductor; causing a change in the orbital bias of the extruded magnetic field so that the magnetic field collapses and a back-emf is generated, the back-emf having electrical energy associated with it; providing bias changing means, repeatedly changing the bias by such means, so that electrical energy associated with the back-emf is made available in the circuit; providing a receiving device capable of receiving such energy for utilization; and operatively connecting the receiving device to receive the said energy.

In a preferred form of the invention according to this aspect, the method includes applying the energy associated with the back-emf to the source, thereby to enhance energy usage efficiency in the circuit to a factor of 1 or more in comparison with a Resistor Temperature Versus Wattage Calibration Circuit.

The device may be an energy consuming load or a replenishable energy source.

In a further preferred form, the bias changing means comprises wave rectifier means and the method includes applying the wave rectifier means to interrupt the electric current.

Further preferably, the inductor used in performing the method has a core capable of inducing a magnetic moment associated with a collapsing magnetic field. In a preferred form of the method, the core is a solid core.

The inventive method preferably further includes the steps of selecting a value for a variable selected from the frequency of interruptions from the wave rectifier, the duty cycle, the thickness of the wiring in the circuit and efficiency of the core of the inductor so that the magnitude of the back-emf generated when the magnetic field collapses is in a predetermined range according to operational requirements of the receiving device, the value being set in accordance with operational requirements of a desired end application.

In a preferred form of the invention the inductor is a transformer means. The transformer has primary winding means of sufficient size to cause a voltage pressure to be established in use between it and the circuit, so that energy associated with the back-emf generated is supplied to the circuit.

In a further preferred form of the invention, the interruption means comprises a current rectifier means. The rectifier means may be a diode or triac in the case of alternating current.

According to a further aspect of the invention, there is provided apparatus for utilizing a back-emf, such apparatus comprising an inductor having a core suitable for generation of back-emf from collapsing magnetic fields, and an electrical circuit including said inductor, a replenishable energy source, an energy receiving device and means for changing orbital bias of a magnetic field set up in use and associated with said inductor, both such source and such means being configured to operate the inductor, and variable selection means operable to set a variable, selected from the frequency of interruptions from the interruption means and duty cycle, so that, in use, by operation of the orbital bias changing means, such magnetic field associated with the inductor is caused repeatedly to collapse and be restored, thereby generating electrical energy, the circuit being capable of conducting such energy so as to make it available to be used at said receiving device.

In a preferred form of the apparatus, the destination device is selected from at least one of a load to be powered and a replenishable energy source.

In a further preferred form, the orbital bias changing means comprises current interruption means, such a diode or a triac or similar suitable rectification means such as a wave rectifier. In a yet further preferred form of the invention, the inductor has a core that is capable of inducing a magnetic moment associated with a collapsing magnetic field or back-emf.

In the following, the invention is explained in more detail by reference to the annexed drawings, in which:

Figure 1 illustrates schematically a circuit according to which the invention may be applied;

Figure 2 illustrates an embodiment of an electrical generator apparatus that may be used in exercising the invention;

Figure 3 illustrates in A a control circuit described in Example 1 and in B a test circuit the performance of which was compared with the circuit in A; and

Figure 4 illustrates a test circuit referred to in Example 2 below.

By connecting an inductor means with a load-bearing circuit and causing a back-emf to be established through the inductor, a voltage pressure may be created sufficient to restore energy to the source and reduce its rate of depletion, or the rate of consumption of energy therefrom. The voltage pressure is represented by an additional potential difference provided through the establishment of the back-emf. It is not contemplated that the load itself should consume less energy than it would otherwise do, but that a back-emf induced by means of the inductor is harnessed so as to cause electrical charge to be directed from the inductor to wherever required, be it source, load or other device.

The circuit may be supplied with electrical energy from either a direct or alternating current source.

The inductor means may be any suitable such means known in the art. Preferably it is a transformer. However, it may alternatively be a winding or choke and should preferably have an inductive load associated with it. The inductor preferably comprises a core capable of inducing a magnetic moment associated with a collapsing magnetic field, The inductive load is commonly an iron core located co-axially within the inductive device. However, it may alternatively be a suitable liquid or gaseous medium, or combinations thereof, including with solid material.

To generate a back-emf, the circuit is caused to be repeatedly closed and opened, thus disrupting or interrupting electrical current flow through the inductor. This can be accomplished by use of any suitable interruption means. A preferred such means is a variable duty cycle chopper.

In the case where the energy source delivers alternating current, the interrupter means may comprise a wave rectifier means, preferably a diode, triac or such like.

In the case of a direct current source, wave rectification and current interruption are achieved through the use of a current rectifying device such as an oscillator or a mosfet or suitable equivalent wave rectifier means, such as would set up a fluctuating magnetic field in relation to the inductor.

The method of restoring, returning or recycling electrical energy to a device - be it a source, a means of storage or a processor, such as a consumer of such energy - that forms the substance of this invention, thus alternatively includes steps of (1) setting up an extruded magnetic field associated with an inductor that is configured to operate in a circuit that is itself operatively configured to enable electrical energy to be passed to and from such inductor and (2) changing the orbital bias of the extruded magnetic field. By "extruded magnetic field" is meant a magnetic field that is associated with an inductor, such as a solenoid, or is induced with the aid thereof and is in a state of distortion or imbalance.

It is believed that the changing orbit bias that is associated with the disruption of electrical current leads to the collapse of the magnetic fields and the change in current that is manifested in the back-emf. The changing bias recycles the current to render it reusable in the circuit at whichever point it is operationally required. During the period when the energy supply source is disrupted or disconnected due to the operation of an interruption device, an alternative circuit is used to promote the recylcling of this back-emf current. The use of an inductive load in the core of the solenoid enhances the efficiency of the apparatus. This load may be any substance or material, be it gaseous liquid or solid or a combination of one or more thereof, or even a vacuum. Such load should have properties rendering it capable of facilitating creation of a magnetic field of sufficient strength to enable a useful back emf to be generated. By "useful" is meant a back-emf that is suitable for supplying energy for a particular application or operational requirement. Preferred core materials are iron and other ferrous materials.

Thus, by repeatedly changing the bias, a disruptive or switching effect is achieved and resultant energy, detectable as an electric current is made available for use as desired by the operator or designer of the circuit. Suitable bias changing means include wave rectifiers and other devices that interrupt current flow or change current direction. In this context, the word interrupt includes such changes.

The circuit need not be complex. It should, however, include means for disrupting or reversing the current to the inductor, as described above.

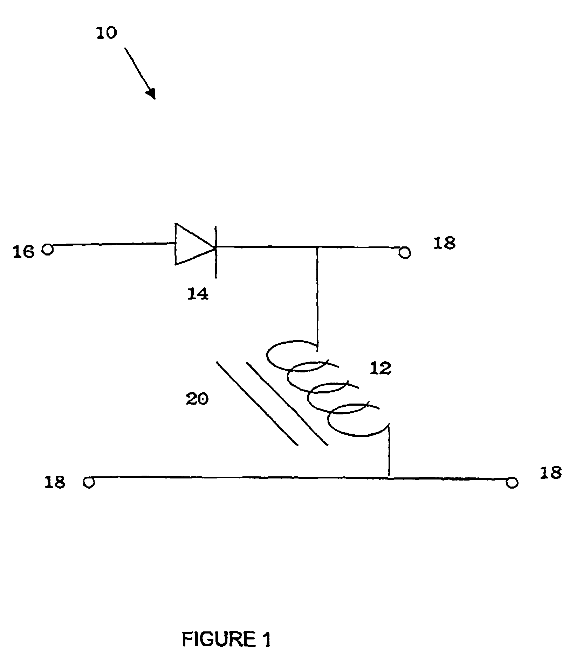

The invention will be described further with reference to accompanying Figure 1, illustrating generally at 10 a portion of an electrical circuit in which the invention is applied.

Connected by means of suitable wiring in series with a primary inductor 12, is a wave rectifying diode 14, serving as an interrupter means for electrical current supplied to the circuit from a source (not shown).

When a full-wave AC or full square wave rectified DC waveform is applied to input 16, a wave rectified- or pulsing DC waveform is created in the primary winding of the inductor 12. On interruption of each waveform cycle, the current change in the winding of the inductor 12 induces a magnetic field in the iron core 20 associated with it.

When the magnetic field collapses, it is thought that, due to the "blocking effect" of the interruption caused by the wave rectifier, a back-emf results. This induces a corresponding reverse waveform in the inductor, so that the waveform associated with the winding across the core 20 is a full sine wave in the case of an alternating current source, and a full square wave in the case of a direct current source.

The inductor 12 may be connected with a load (not shown) in series or in parallel at any of the points 18.

Depending on the frequency of interruptions from the wave rectifier, the duty cycle, the thickness of the wiring and efficiency of the core, the voltage across the inductor 12 may be conducted through a closed circuit to be used in powering the load and/or be returned to the power source according to requirements. Desirably, but not essentially, the frequency of interruptions should not be less than 40 Hz. Preferably it should be 50 Hz or more and more preferably 500 Hz or more, but this will be largely dependent on the application.

A switch mode system may be utilised in performing the method of the invention. An example of a suitable closed circuit employing such a system includes a battery as DC energy source to power a lamp. A transformer may be connected in series with the lamp and in turn connected with a variable duty cycle chopper.

In addition, the output from the transformer is preferably shunted through a diode to a suitably high value resistor and capacitor connected in series. When the circuit is closed by means of the chopper, current passes through the load and transformer. Repeated opening and closing of the circuit by means of the chopper causes a back-emf and current to be induced in the inductor. A voltage pressure is established between the inductor and the low potential terminal of the source, so that the charge induced in the inductor is fed to the source, replenishing its drawn down energy. The net effect is that the workload exceeds the depletion rate of the source.

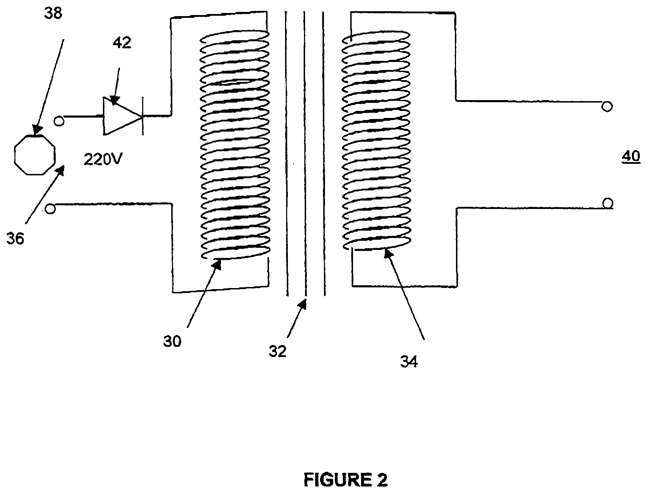

A further embodiment of a circuit used in the invention appears illustrated in figure 2, where a primary winding 30 having, for example 220 turns around a cylindrical core 32 of a ferrous metal such as iron or an iron alloy, is associated with a secondary winding 34 of a like number of turns. The secondary winding is wound round the core adjacent to or around the primary winding 30. This configuration results in electromagnetic coupling between the windings via core 32.

The circuit input 36 is connected to an AC power source 38. This would be typically a 220 V mains supply at 50 Hz. The circuit output is taken at 40 from the secondary winding.

A diode 42 or other half-wave rectifier is connected in series with primary winding 30. On applying a full-wave AC waveform to the circuit input 36, a half-wave rectified or pulsing direct current comes to exist in the primary winding 30.

On each positive-going half-cycle, the primary winding induces a corresponding current in the secondary winding 34. But, when due to the diode's blocking effect, the magnetic field resulting from the current in the primary winding collapses, the back-emf that results in the primary winding induces a corresponding negative-going waveform in the secondary winding 34. Hence the output 40 from the secondary winding is a full-wave AC waveform.

Although the invention has been described above with reference to one inductor being employed at a time, it will be appreciated by those in the art that further inductors may be connected in operative configuration so as to achieve further enhancements of system performance. For example, two or more primary windings may be connected in parallel, each having and independent magnetically susceptible core associated with it, with a rectifier connected in series with the parallel windings. In another example, respective primary and secondary windings may be coupled with a single core, with a rectifier connected in series with the primary winding.

The primary and secondary windings may be positioned end to end coaxially around the core or may overlap in annular fashion with the secondary, having greater diameter, being wound around the primary.

In an alternative configuration, two primary windings, having associated secondary windings, are connected in parallel, but placed around a common core. Wave rectifiers are connected in series with each primary winding.

The use in the method of the invention of the back-emf-generating apparatus above provides net energy savings opportunities to an energy consuming system in that the energy associated with the generated back-emf may be supplied to the energy processing device - be it an energy consumer or an energy source.

Applications of the back-emf generating apparatus of the invention include, without necessarily being limited to, switch mode systems, boost converters, battery operated systems, recharging of batteries, household electrical equipment, hybrid engines and heavy and light duty industrial equipment.

Other variations on and embodiments of circuits used in performing the method of the invention will be apparent. The non-limiting example that follows shows how the inventive method may be used in achieving an efficiency factor that reaches at least 90 % and even exceeds unity.

## EXAMPLE 1

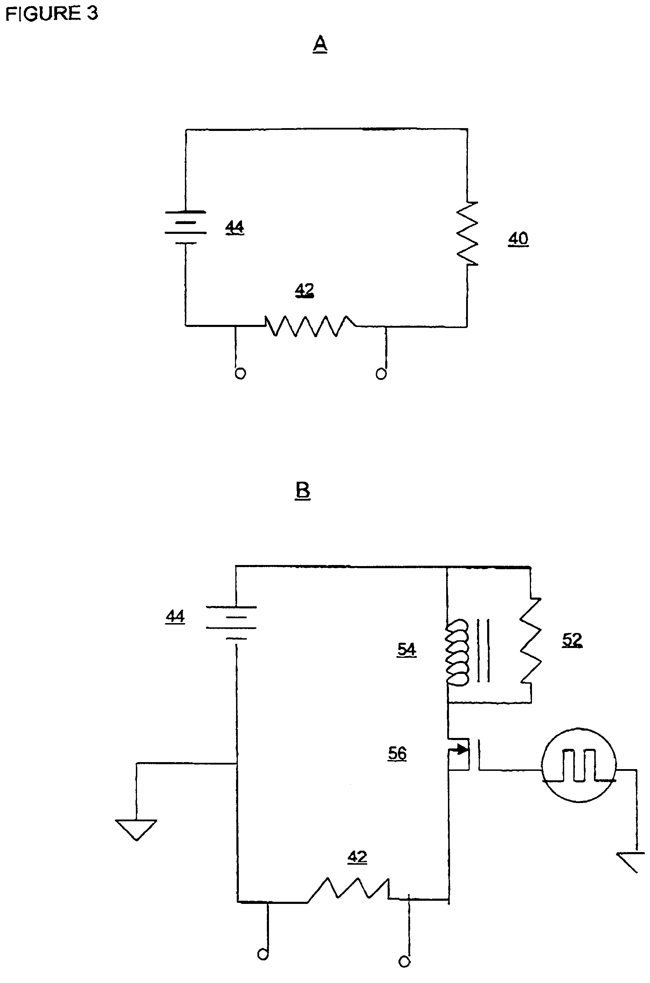

Two tests were conducted on Phillips wire wound 10 watt resistors. The resistors had identical surface areas. The thermally coupled device used was a standard PC Platinum based probe linked to a thermal digital display device. Care was taken to ensure that the thermal coupling of the thermometer probe to the resistor was identical in both tests. The object of the test was to compare the rate at which amperage was drawn by a standard 'Resistor Temperature Versus Wattage Calibration Circuit' test, hereinafter referred to as the control test, indicated in Figure 3A, and from a test using a switching device and an inductor, indicated in Figure 3B. If the control test indicated that a greater current was being supplied by the battery than was evident through the test which used the device and yet the actual heating efficiency of the device was the same as that of the control then the condition would be that the use of the device could enhance heating efficiencies. The same battery was used in both tests. The amperage draw down rate was deduced by an analysis of the voltage measured with an oscilloscope probe placed across a low value resistor and the same sense resistor was used in both tests in order to obviate any erroneous comparative measurements. The positioning of the sense resistor is indicated on the circuit drawings.

The control test (Figure 3A) had a thermocoupled 68 $\Omega$ resistor 40 and a sense resistor 42 placed in series with the battery terminals 44. All subsequent measurements were taken when the temperature across the resistor 42 had reached a maximum value. The digital thermometer indicated a heat of 95°C at its highest reading. At that time, the current delivered by the battery was evaluated from an analysis of voltage measured across the sense resistor. This was 0.0049 V. In terms of Ohm's law, volts divided by the ohms value of the sense resistor, being 0.025 $\Omega$, gives the current as 0.1960 A. The power delivered by the battery is calculated by multiplying the value of the loaded source battery voltage being 12.28 V with the amperage value of 0.1960 A, which gives a power of 2.406 W.

The test circuit (Figure 3B) had the same thermocoupling on a 22 $\Omega$ resistor 52 placed in parallel to an inductor 54 before a switching device 56, in this example, a mos-fet. The same 0.025 $\Omega$ sense resistor 42 as was used in the control test was placed in series with the negative terminal of the battery 44 on the ground as indicated in Figure 3B . The duty cycle was adjusted until the digital thermometer (not shown) indicated a heat of 93 °C on the load resistor 42 at its highest reading. All measurements were taken subsequent to this.

The amperage draw down was deduced from an analysis of the square wave voltage measured across the sense resistor 42. The wave form observed was approximately a square wave with a slope during the on time from 0.0162 to 0.0217. These voltage values were added together and then divided by 2 to establish the average peak voltage during the on period being 0.01895 V. In order to establish the average amperage as it related to the off and on time of the switched power supply source 44, it was necessary to analyse the period during which the switched power supply was off compared to the period during which the switched power supply was on. The period per cycle was 0.2 ms. The total length of the cycle was measured in 37.5 time divisions, of which 29 divisions represented the period during which the switch was off and 8.6 divisions represented the period during which the switch was on. Therefore the average peak voltage of 0.01895 V was divided by 37.5 and then multiplied by the one period of 8.5 to give an average of 0.043 V. This voltage was then divided by 0.025, being the sense resistor's ohms value, which equals an average amperage of 0.1718 A. In order to establish the power delivered by the battery supply source, 0.1718 A was multiplied by the loaded source battery voltage being 12.28 V, which gives a power of 2.1097 W.

Ambient temperatures in both tests were stable and the tests were conducted within one hour of each other. Values across the sense resistor were standardised by the use of the same resistor in both tests, therefore obviating errors in the comparative voltage values.

Therefore the heat on the resistor in the control test was generated by a wattage dissipation of 2.406 W from the source battery. Allowing for a 5 percent margin for error on all measurements, it can be said that the heat on the resistor in the test circuit was generated by a wattage dissipation of 2.1097 W plus 5 percent, or 2.21519 W, indicating an efficiency of 8.6 percent in excess of a factor of 1.

In other words, it was found that at least 8.6% less current was required by the test circuit to produce effectively the same sensible temperature in the resistor there as was measured in the control circuit. This standard control circuit is accepted as the most efficient arrangement hitherto possible.


EXAMPLE 2


The following tests were conducted to prove that subject to specific circuit configurations an inductor is able to enhance energy efficiency to levels beyond the standard capabilities of an electrical power supply source. The tests also indicate that in the event that a resistor is placed in series with a power supply source and an inductor as configured in the Test Circuit Test, the correct wattage analysis of that power may be calculated as the energy source voltage multiplied by the amperage or VI, as it is known and that i squared r ($I^2R$) analysis appears to be erroneous as a base calculation of the wattage and power generated in this particular system.


THE CONTROL TEST ESTABLISHING TEST PARAMETERS


The control used here corresponds to the Resistor Temperature Versus Wattage Calibration Circuit of the previous example.

*    A 100 Ω, 10 W, Phillips wire-wound resistor was placed in series with a 6 V battery supply source. The source consisted of two 6 V batteries used in parallel to each other. Their composite voltage was measured from the positive terminal of the first battery to the negative terminal of the second battery. The voltage measured was 6.12 V. In terms of Ohm's law, therefore:

$$6.12 \text{ (battery voltage)} \div 100 \ \Omega \text{ (resistive load)} = 0.0612 \text{ A}$$

*    To determine power dissipation, the current is multiplied by the voltage, i.e.

$$\text{Power} = 6.12 \text{ V} \times 0.0612 \text{ A} = 0.374 \text{ W}.$$

*    A PT platinum based probe was attached to the resistor which, in turn, was linked to a digital display device. Ambient room temperature was 22 °C. The heat measured from that resistor was 30 °C. Therefore, in terms of classical scientific analysis and based on these specified test parameters, 0.374 W correlates to 30 °C. This test, hereafter, is referred to as the Control Test.

*    It follows, therefore, that if an alternative test circuit could heat a resistor to 30 °C and, provided that the new test used a load resistor which had the identical surface area and wattage to that 100 Ω resistor used in the Control Test, then that alternate test circuit would, in fact, be generating 0.374 W - irrespective of any actual measurements evident on that circuit.

*    However, in the event that the second test circuit was powered by the same battery supply source, being 6.12 V, and if the amperage dissipated by that battery - and deduced from a measurement of the voltage across a sense resistor - was less than 0.0612 A - per the Control Test - and yet the heat was 30 °C ,which level was consistent with 0.374 W - then one may deduce that something other than the existing power supply source had contributed energy to the circuit to enhance its efficiency beyond the standard capabilities of those 6.12 V battery supply sources.

THE TEST CIRCUIT TEST

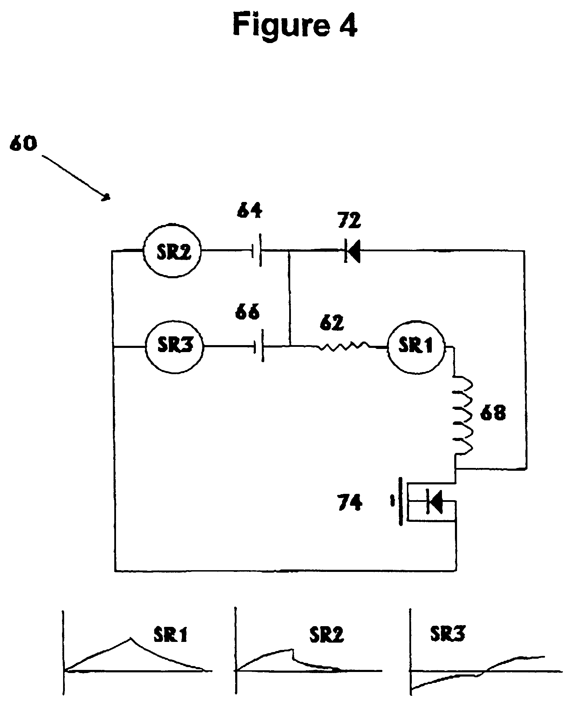

* With reference to figure 4, the Test Circuit 60 comprised a 47 Ω 10 W, Phillips wire-wound resistor 62 placed in series with a 6 V battery supply source comprising, as before, first and second 6 V batteries, 64 and 66 respectively. An inductor 68, in turn, was placed in series with load resistor 62. A positively biased diode 72 was placed in parallel with the inductor 68 and above a switching device being an 'N' channel mos-fet 74. This wire was then taken back to the positive terminal of the second battery which was connected in parallel to the first battery. The battery voltage was 6.12 V.

* Three sense resistors were used - one positioned directly behind the 47 Ω resistive load and one each on both negative terminals of the two batteries. Again, in terms of classical scientific analysis the assumption was made that the sum of both currents evident at the negative terminal would be consistent with the rate at which energy was dissipated by the batteries.

* The duty cycle of the switching device was adjusted to a 50:50 mark space ratio. Therefore the switch was off for a period consistent with the time during which the switch was on. The heat indicated on the thermocoupled digital display device was 30 °C. Ambient room temperature was still 22 °C.

* All wave forms for the three sense resistors SR1, SR2 and SR3 are indicated in figure 4 below the circuit 60:

* **SR1** - the voltage wave form across the sense resistor placed in series with the load resistor 62, was roughly triangular in shape but followed an exponential rise and fall during the on and off periods of each cycle. Voltage did not cross ground. Peak voltage was positive 0.006 V. In order to find an approximate rms voltage this value was divided by 2 giving 0.003 V across the sense resistor. The amperage through the load resistor was calculated in terms of Ohm's law and was thus the sum of the 0.003 V divided by the resistance value of the sense resistor (in ohms), being 0.05 Ω. The amperage thus equals 0.060 A. In order to evaluate the power over the load resistor - also in terms of Ohm's Law, therefore:

$$I^2 R = 0.060 \text{ A} \times 0.060 \text{ A} \times 47 \ \Omega = 0.169 \text{ W}$$

This value was not consistent with but less than the evident wattage indicated by the heat of the load resistor, which measured 30 °C.

In terms of the Control Test, 30 °C under these test parameters corresponds to 0.375 W. It would appear that the phenomenon is only reconcilable if the mathematical formula applied is based on the evident amperage multiplied by the battery source voltage. Therefore:

$$0.06 \text{ A} \times 6.12 \text{ V} = 0.367 \text{ W}$$

This wattage value was precisely equivalent to the evident heat.

* **SR2** - the voltage wave form across the sense resistor placed in series with Battery 1 (64) - was roughly triangular in form with some exponential curvature as evidenced in the wave form over SR1. For the purposes of calculating average current this was assumed to be triangular and all measurements may be subject to an error not expected to exceed 10 percent. Their measurements were gauged as the sum of the off portion of the cycle added to the sum of the on portion as both portions of the cycle manifested above ground.

* In calculating the power delivered by the batteries, it was assumed that since the battery voltage was constant during each cycle, it could be calculated by taking an average of the battery current and multiplying this by the battery voltage (P=VI). The voltage wave form evident during the on portion of the cycle peaked at 0.0035 V. Therefore: -

(0 V + 0.0035 V)/2 = 0.00175 V [the sum is divided by 2 - being the average of the on cycle].

* This sum is divided by 2 again - to allow for the 50% duty cycle - and this then gives a voltage value of 0.000875 V. This is the average voltage, which, in terms of Ohm's Law is divided by the ohms value of the sense resistor, being 0.05 Ω, to give the amperage of 0.0175 A.

* The voltage wave form evident during the off period of the cycle peaked at 0.0015 V. Therefore, as above

$$(0 \text{ V} + 0.0015 \text{ V})/ 2 \text{ (being the average of the off cycle)} = 0.00075 \text{ V}$$

* This sum is divided by 2 to allow for the 50 % duty cycle, thus giving a value of 0.000375 V. This is the actual voltage, which, in terms of Ohm's Law, is divided by the ohms value of the sense resistor being 0.05 $\Omega$ thus giving an amperage of 0.0075 A.

* The sum of the amperage of both cycles therefore is :

$$\text{Amperage} = 0.0075 \text{ A} + 0.0175 \text{ A} = 0.025 \text{ A.}$$

* Therefore, the actual rate of dissipation of wattage from Battery 1 is:

$$\text{Amperage multipled by the evident battery voltage, or}$$

$$\text{Dissipation rate} = 0.025 \text{ A} \times 6.12 \text{ V} = 0.153 \text{ W}$$

* **SR3** - The wave form evident from the voltage over the sense resistor placed in series with Battery 2 (66) indicated an equivalent above- and below-ground wave form. Both on and off periods of the cycle peaked at 0.0055 V above and below the ground respectively. In as much as the on cycle crossed a little below ground, it is evident that no power was being lost from this battery but, in fact, there was a small margin of gain. The value is too small to represent a meaningful measurement and the entire cycle was therefore discounted as not representing any wattage loss but, in fact, some gain.

RESULTS AND CONCLUSIONS

* The wattage based on an $I^2R$ analysis - being generated across the load resistor - is calculated at 0.169 W. The actual wattage dissipated at the battery terminals is calculated at 0.153 W. This only represents a 10 % gain above unity - which may be evident mathematically and which, in any event is a marginal value and is consistent with the previous Resistor Temperature Versus Wattage Calibration Test. This marginal gain could, in effect, be further discounted by an adjustment to the amperage values to bring them in line with rms values, albeit that the consequent result would conflict with the evident heat apparent over the 47 $\Omega$ load resistor.

* It has been very difficult to reconcile the difference between the calculated wattage and the heat dissipation of the load resistor. As mentioned the most accurate gauge appears to be if the average amperage is multiplied by the source battery voltage - although this is not in line with classical scientific circuit analysis.

* Either way, the Control Test dissipated 0.0612 A to achieve a temperature of 30 °C over the load resistor and the Test Circuit Test dissipated 0.025 A to achieve an equivalent temperature over its load resistor. So, scientifically and correctly, the gain in efficiency is 100 percent greater than unity as represented in the Control Test.

* It must be noted that the two load resistors being the 100 $\Omega$ and the 47 $\Omega$ resistors used in the Control Test and the Test Circuit Tests respectively both had the same surface area and care was taken to ensure that both resistors were strapped to the temperature probe in an identical manner. However, the calorific values of both tests were not accurately ascertained. Both tests were subject to fluctuations in room temperature but, as both were exposed to the same variations then their values may be considered to be proportionate and, in any event fluctuations and variations in ambient room temperatures were not apparent. However, in the interests of conservative computations it is possibly advisable to discount the Test Circuit Test by a further 5 percent. But in view of the enormous gain in efficiency over the Control Test this makes very little significant difference to the proof of efficiency in the Test Circuit Test results will still remain at not less than 100 percent greater than - unity being standardised by the Control Test.

The examples recorded above do not necessarily represent optimized values. Further optimization may be attained by providing two or more inductors, two or more energy sources or an energy storage means and appropriate switching circuitry and selection means to facilitate balanced and efficient drawing and replenishment.

## Claims

1. Method of harnessing back-emf on to an electrical circuit, comprising the steps of providing a circuit, said circuit including an inductor and an energy receiving device and being configured to operate the device, providing a source of electrical energy capable of supplying an electrical current to the circuit, connecting the source in operative configuration in series with the inductor, causing current to pass from the source through the inductor, generating a back -emf in the inductor, such back-emf having electrical energy associated with it and providing an additional source of potential difference to the circuit, and supplying the energy associated with the back-emf to the receiving device, so that the efficiency of energy usage in the circuit is increased to a factor of 90 % or more in comparison with a Resistor Temperature Versus Wattage Calibration Circuit.

2. Method according to claim 1, wherein the step of generating the back-emf includes the step of interrupting the current.

3. Method according to claim 2, including the steps of interrupting and restoring the current repeatedly.

4. Method according to claim 3, wherein the interrupting and restoring of the current includes the step of applying rectifying means to the current.

5. Method according to claim 4, including the steps of selecting a variable from one or more of the frequency of interruptions from the rectifying means, the duty cycle of such interruptions, the thickness of the wiring in the circuit and efficiency of the core of the inductor and setting a value for the variable in accordance with operational requirements of a desired end application for the circuit.

6. Method according to claim 5, including setting the frequency of interruptions to be at least 40 Hz.

7. Method according to any one of claims 1 to 6, wherein the receiving device is at least one of an energy consuming load and an energy storage means.

8. Method according to claim 7, wherein the energy storage means is a replenishable source of electrical energy.

9. Method according to claim 7, wherein the receiving device is a source of alternating current.

10. Method according to any one of claims 7 to 9, including the step of providing at least one inductive load, the or each inductive load being operatively associated with the or each receiving device.

11. Method according to any one of the preceding claims, in which the inductor is a transformer.

12. Method of restoring electrical energy to a source comprising the steps of providing a closed circuit including a source of electrical energy and an inductor configured to operate therein and receive electrical energy from the source; causing electric current to pass from the source to the inductor; causing the establishment of an extruded magnetic field associated with the inductor; causing a change in the orbital bias of the extruded magnetic field so that the magnetic field collapses and a back-emf is generated, the back-emf having electrical energy associated with it; providing bias changing means, repeatedly changing the bias by such means, so that electrical energy associated with the back-emf is made available in the circuit; providing a receiving device capable of receiving such energy for utilization; and operatively connecting the receiving device to receive the said energy.

13. Method according to claim 12, including applying the energy associated with the back-emf to the source.

14. Method according to claim 12 or 13, wherein the bias changing means comprises wave rectifier means, the wave rectifier means being appliable to interrupt the electric current.

15. Method according to any one of claims 12 to 14, wherein the inductor includes a core capable of inducing a magnetic moment associated with a collapsing magnetic field.

16. Method according to any one of claims 12 to 15, further including the steps of selecting a variable from the frequency of interruptions from the wave rectifier, the duty cycle of such interruptions, the thickness of the wiring in the circuit and efficiency of the core of the inductor, and setting a value for such variable so that the magnitude of the back-emf generated when the magnetic field collapses is in a predetermined range according to operational requirements of the receiving device.

17. Apparatus for utilizing a back-emf comprising an inductor, having a core suitable for generation of back-emf from collapsing magnetic fields and an electrical circuit including said inductor, a replenishable energy source, an energy receiving device and means for changing orbital bias of a magnetic field set up in use and associated with said inductor, both such source and such means being configured to operate the inductor, and variable selection means operable to set a variable, selected from the frequency of interruptions from the interruption means and its duty cycle, so that, in use, by operation of the orbital bias changing means, such magnetic field associated with the inductor is caused repeatedly to collapse and be restored, thereby generating electrical energy, the circuit being capable of conducting such energy so as to make it available to be used at said receiving device.

18. Apparatus according to claim 17, wherein the destination device is selected from at least one of a load to be powered and the replenishable energy source.

19. Apparatus according to claim 17 or 18, wherein the orbital bias changing means comprises current interruption means.

20. Apparatus according to claim 19, wherein the source is a source of alternating current and the current interruption means is a wave rectifier.

21. Electrical energy generating means comprising an inductor, bias changing means operatively connectable with the inductor and capable of acting on a current passing through it in use to generate a back-emf therein, an energy receiving device and means for directing electrical energy generated in the inductor to the receiving device.

10

16 ⊙ —————▷|————————————⊙ 18

14

20

12

18 ⊙—————————————————————⊙ 18

FIGURE 1

**FIGURE 2**

FIGURE 3

<u>A</u>

<u>B</u>

# Figure 4

EP 0 932 248 A1

## EUROPEAN SEARCH REPORT

**European Patent Office**

**Application Number**
EP 98 20 2179

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 82 01627 A (UNITRON CORP) 13 May 1982<br>* the whole document * | 1-7, 11-14, 17-19,21 | H02M3/155 |
| X | EP 0 650 251 A (NICOTECH LTD) 26 April 1995<br>* column 3, line 52 - column 4, line 29; figure 1 * | 1,2,12, 17,21 | |
| A | EP 0 151 199 A (ZETEX LTD) 14 August 1985<br>* abstract; figure 1 * | 1,12,17, 21 | |
| A | EP 0 143 048 A (THOMSON CSF) 29 May 1985<br>* abstract; figure 1 * | 1-21 | |

**TECHNICAL FIELDS SEARCHED (Int.Cl.6)**

H02M

The present search report has been drawn up for all claims

| Place of search | Date of completion of the search | Examiner |
|---|---|---|
| THE HAGUE | 26 April 1999 | Gentili, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

15

**ANNEX TO THE EUROPEAN SEARCH REPORT
ON EUROPEAN PATENT APPLICATION NO.**                    EP 98 20 2179

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-1999

| Patent document cited in search report | | Publication date | Patent family member(s) | | Publication date |
|---|---|---|---|---|---|
| WO 8201627 | A | 13-05-1982 | AU | 7297781 A | 21-05-1982 |
| EP 0650251 | A | 26-04-1995 | GB | 2283136 A | 26-04-1995 |
| EP 0151199 | A | 14-08-1985 | NONE | | |
| EP 0143048 | A | 29-05-1985 | FR<br>DE | 2555375 A<br>3471410 A | 24-05-1985<br>23-06-1988 |

EPO FORM P0459

For more details about this annex : see Official Journal of the European Patent Office, No. 12/82